# EUROPÄISCHE PATENTSCHRIFT

(11) **EP 0 490 199 B1**
(45) Veröffentlichungstag und Bekanntmachung des Hinweises auf die Patenterteilung: **07.09.1994**
(21) Anmeldenummer: 91120614.2
(22) Anmeldetag: 29.11.1991
(51) Int. Cl.: B01D 53/34, B01D 53/14

(54) **Verfahren zur Entfernung von Phosgen aus Abgasen**
Process for the removal of phosgene from waste gases
Procédé d'élimination de phosgène de gas d'échappements

(30) Priorität: 13.12.1990 DE 4039750
(43) Veröffentlichungstag der Anmeldung: 17.06.1992
(73) Patentinhaber: BASF Aktiengesellschaft, 67063 Ludwigshafen (DE)
(72) Erfinder: Henkelman, Jochem, Dr., W-6700 Ludwigshafen (DE); Kahl, Thomas Michael, Dr., W-6725 Roemerberg (DE); Troetsch-Schaller, Irene, Dr., W-6710 Frankenthal (DE); Hupfer, Leopold, Dr., W-6701 Friedelsheim (DE); Franzischka, Wolfgang, Dr., W-6710 Frankenthal (DE); Schwarz, Wolfgang, Dr., W-6701 Otterstadt (DE)

(56) Entgegenhaltungen:
- EP-A- 0 255 022
- EP-A- 0 367 050
- EP-A- 0 452 806
- DE-A- 3 625 378
- US-A- 4 493 818

## Beschreibung

Phosgen ist wegen seiner hohen chemischen Reaktionsfähigkeit ein häufig eingesetztes Reagens zur Synthese Von Zwischenprodukten, wie Carbonsäurechloriden, Chlorformiaten, Carbaminsäurechloriden und Isocyanaten. Diese wertvollen Zwischenprodukte dienen ihrerseits zur Herstellung von Polyurethan-Kunststoffen, Arzneimitteln, Pflanzenschutzmitteln, Farben, Lacken und Klebstoffen.

Wegen der Giftigkeit müssen phosgenhaltige Abgase sorgfältig gereinigt werden. Dazu sind in der Technik mehrere Methoden bekannt. Am häufigsten werden phosgenhaltige Abgase mit Natronlauge chemisch gewaschen. Um die Phosgenzersetzung zusätzlich zu beschleunigen, werden dabei häufig tertiäre Amine (US-A 4 493 818, DE-A 36 25 378) oder Ammoniak selbst (DE-B 25 31 545) zugesetzt. Bei dieser Abgasbehandlung entstehen jedoch große Abwassermengen, die gegebenenfalls zusätzlich behandelt werden müssen (Entfernung von z.B. Aminen).

Die Hydrolyse kann auch an festen Kontakten wie z.B. Aktivkohle (DE-A 21 31 403, DE-B 29 19 661) oder an Ionenaustauschern (Wolf und Renger, Z. Chem. 15, 284 f (1975)) erfolgen.

Weitere Methoden sind Adsorption an wasserfreiem Aluminiumoxid (US-A 3 789 580) bzw. an Aktivkohle (DE-A 33 46 176). Das bei der anschließenden Desorption wieder freiwerdende Phosgen muß zusätzlich, beispielsweise durch Hydrolyse mit Natronlauge zersetzt werden.

Phosgen kann auch bei Temperaturen oberhalb von 900°C durch thermische Umsetzung mit Wasserdampf vernichtet werden (DE-A 23 44 217). Die dabei entstehenden Chlor und Chlorwasserstoff enthaltenen Verbrennungsgase müssen in einem Wäscher nachbehandelt werden. Nachteilig bei diesem verfahren sind die hohen Temperaturen sowie die hohe Aggresivität des Chlorwasserstoffs bei diesen hohen Temperaturen gegenüber metallischen Werkstoffen.

Der Erfindung lag daher die Aufgabe zugrunde, eine möglichst einfache und sichere Methode zur Beseitigung von Phosgen aus phosgenhaltigen Abgasen bereitzustellen, ohne daß zusätzlich große Abwassermengen anfallen.

Es wurde nun gefunden, daß diese Aufgabe dadurch gelöst werden kann, daß man das Abgas in einer Auswaschzone mit einer Flüssigkeit behandelt, die Verbindungen der allgemeinen Formel 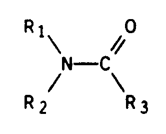
enthält oder aus diesen besteht, in der
R₁ und R₂ gleiche oder verschiedene Bedeutung haben und für aliphatische oder cycloaliphatische Alkylreste mit 1 bis 8 C-Atomen stehen,
oder R₁ und R₂ für die Gruppierung -(CH₂)ₙ- stehen, in der n 4 oder 5 ist,
R₃ für Wasserstoff oder eine aliphatische oder cycloaliphatische Alkylgruppe mit 1 bis 6 C-Atomen steht, oder
R₁ bzw. R₂ und R₃ für die Gruppierung -(CH₂)ₘ- stehen, in der m 3 oder 4 ist.

Das erfindungsgemäße Verfahren beruht darauf, daß das in den Abgasen enthaltene Phosgen mit der Waschflüssigkeit z.B. mit Dialkylformamiden 1 quantitativ zu dem Vilsmeier-Salz 2 und Kohlendioxid gemäß Reaktionsgleichung 1 reagiert:

### Reaktionsgleichung 1

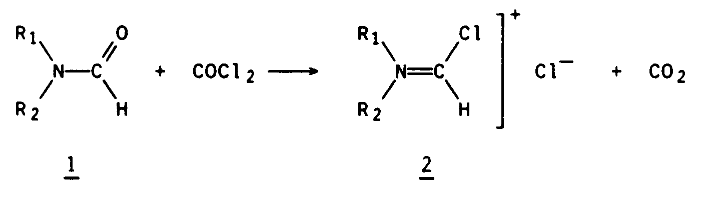

Dieses Vilsmeiersalz reagiert andererseits mit Wasser unter Rückbildung des Dialkylformamids:

### Reaktionsgleichung 2:

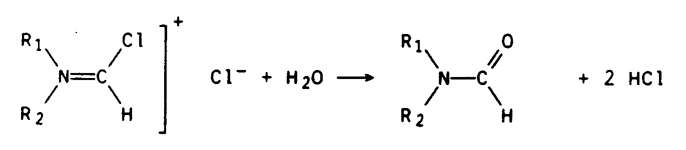

wobei pro Mol umgesetztes Phosgen 2 Mol Chlorwasserstoff entstehen. Damit ergibt sich die Möglichkeit, Auswaschen und Regenerieren zu einem Kreisprozeß zusammenzufassen, indem man die mit Phosgen beladene Auswaschflüssigkeit aus der Auswaschzone abzieht und in einer Regenerationszone durch Umsetzung mit Wasser die Auswaschflüssigkeit wiedergewinnt und in die Auswaschzone zurückführt. Dieser Kreisprozeß kann durch die folgende Gleichung wiedergegeben werden: 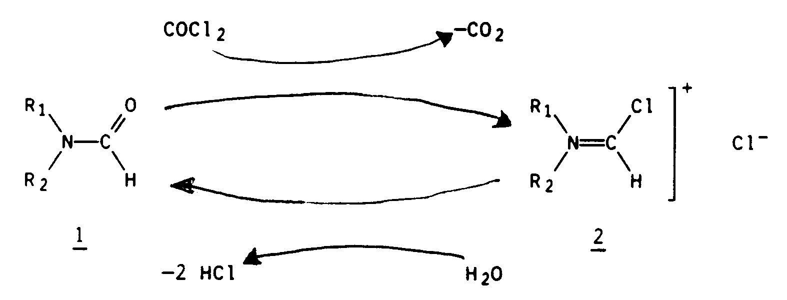
sodaß die Summenreaktion die Zersetzung von Phosgen mit Wasser zu Kohlendioxid und Chlorwasserstoff darstellt:

### Reaktionsgleichung 3:

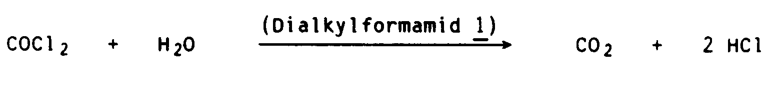

Das eingesetzte Dialkylformamid 1 wird ständig regeneriert und in den Kreisprozeß zurückgeführt.

Setzt man zur Hydrolyse des Vilsmeier-Salzes nur die stöchiometrisch erforderliche Wassermenge ein, so entsteht kein Abwasser. Der bei der Hydrolyse gebildete wasserfreie Chlorwasserstoff kann zusätzlich als Wertprodukt gewonnen werden.

Falls Chlorwasserstoff mit der eingesetzten Flüssigkeit ein stabiles HCl-Addukt bildet, wird die stöchiometrische HCl-Menge gebunden, bevor HCl ausgast. Dies ist beispielsweise bei der Verwendung von Dialkylformamiden der Fall.

Für das erfindungsgemäße Verfahren lassen sich alkylsubstituierte Formamide der allgemeinen Formel 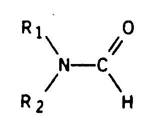
einsetzen, in denen R₁ und R₂ gleiche oder verschiedene Bedeutung haben und für aliphatische und cycloaliphatische Reste mit 1 bis 8 Kohlenstoffatomen, die auch verzweigt sein können, wie beispielsweise die Methyl-, Ethyl-, Isopropyl-, Isobutyl-, 2-Ethylhexyl-, Cyclopentyl- oder Cyclohexylgruppen, stehen. R¹ und R² können auch für die Gruppierung -(CH₂)ₙ- mit n = 4 oder 5 stehen.

Selbstverständlich können auch die entsprechenden Verbindungen anderer Carbonsäuren eingesetzt werden entsprechend der Formel 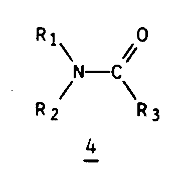
in der R₁ und R₂ die obige Bedeutung haben. R₃ kann für Wasserstoff oder aliphatische oder cycloaliphatische Alkylgruppen mit 1 bis 6 C-Atomen stehen. R₁ bzw. R₂ und R₃ können auch für die Gruppierung -(CH₂)ₘ-, in der m 3, 4 oder 5 ist, stehen.

Selbstverständlich können nach dem erfindungsgemäßen Verfahren auch Gemische der genannten Verbindungen eingesetzt werden.

Nach dem erfindungsgemäßen Verfahren können beide Reaktionsschritte diskontinuierlich nacheinander oder zweckmäßigerweise kontinuierlich, beispielsweise in einer Waschkolonne oder in einem Strahlwäscher, durchgeführt werden. Die Regeneration des Waschmediums mit Wasser kann in einem im Kreislauf befindlichen Hydrolyseapparat durchgeführt werden oder der Einfachheit halber in dem Abgaswäscher direkt erfolgen.

Das erfindungsgemäße Verfahren kann lösungsmittelfrei oder gegebenenfalls auch unter Zusatz eines inerten aprotischen Lösungsmittels, wie beispielsweise Chlorbenzol, Dichlorbenzol, Dimethylsulfoxid, Dimethylsulfolan, Tetramethylsulfamid und Dichlorethan, durchgeführt werden.

Das erfindungsgemäße Verfahren wird bei Temperaturen unterhalb des Siedepunktes der jeweiligen Verbindungen bzw. des miteingesetzten Lösungsmittels durchgeführt. Zweckmäßig sollte die Behandlungstemperatur mindestens 20°C unter dem jeweiligen Siedepunkt liegen.

Das erfindungsgemäße Verfahren läßt sich verfahrenstechnisch in verschiedenartiger Weise gestalten. Es ist bevorzugt, Gas und Waschflüssigkeit im Gegenstrom zu führen. Entscheidend ist, daß Waschflüssigkeit und Gas in innigen Kontakt gebracht werden, daß also beide mit einer großen Oberfläche miteinander in Berührung kommen, damit der Stoffaustausch dieser Zweiphasenraktion gut vonstatten geht. Geeignete Ausführungsformen sind in der Technik hinreichend bekannt, wie Füllkörperkolonnen mit Glas-, Keramik- oder Kunststoffüllkörpern oder Bodenkolonnen mit Glockenböden oder Siebböden.

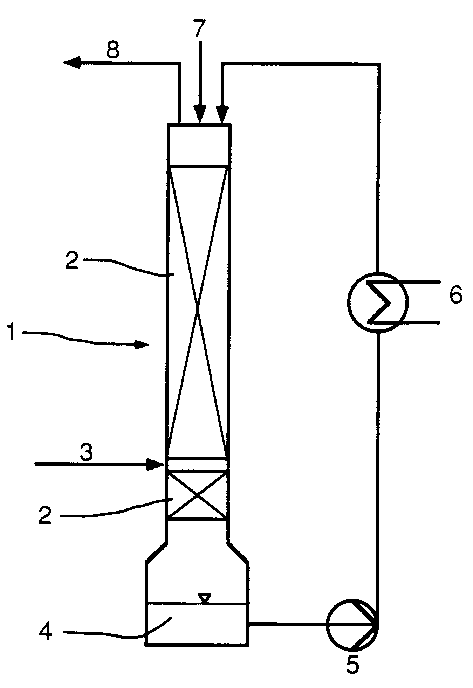

In der Figur ist eine Anlage zur Durchführung des erfindungsgemäßen Verfahrens beispielsweise veranschaulicht.

Mit 1 ist eine Waschkolonne Veranschaulicht, die mit Glasraschigringen 2 (Durchmesser 10 mm) gefüllt ist. Bei 3 wird phosgenhaltiges Abgas in die Waschkolonne eingeführt. Im Sumpf 4 der Waschkolonne befindet sich die Waschflüssigkeit, die mit einer Kreislaufpumpe 5 auf den Kopf der Waschkolonne 1 gepumpt wird, nachdem im Wärmeaustauscher 6 gegebenenfalls die gewünschte Temperatur eingestellt worden ist. Gleichzeitig wird durch Leitung 7 Wasser auf den Kopf der Kolonne aufgegeben, durch den das im unteren Teil der Kolonne gebildete Vilsmeier-Salz wieder in die Waschflüssigkeit und HCl zerlegt wird. Durch Leitung 8 wird das phosgenfreie Abgas der Waschkolonne entzogen. Die wassermenge ist so zu bemessen, daß pro Mol ausgewaschenes Phosgen 1 Mol Wasser, zuzüglich etwaiger Strippverluste, zugegeben wird. Wird weniger Wasser aufgegeben, so kommt die Absorption durch Belegung der Waschflüssigkeit zum Stillstand, bei größeren Wassermengen besteht die Gefahr, daß die Waschflüssigkeit hydrolytisch zersetzt wird. Die Wasserzugabe kann durch den Chlorgehalt der rückgeführten Waschflüssigkeit, oder durch ihre Dichte oder durch ihre Leitfähigkeit gesteuert werden.

Da die Hydrolyse des Vilsmeier-Salzes unter Rückbildung der Waschflüssigkeit, andererseits aber auch die Umsetzung der Waschflüssigkeit mit dem Phosgen praktisch momentan erfolgen, lassen sich durch Bemessung der Höhe der Waschkolonne Auswasch- und Regenerationszone räumlich getrennt voneinander, jedoch in einer einzigen Waschkolonne unterbringen.

Selbstverständlich kann das erfindungsgemäße Verfahren auch in einer Apparatur durchgeführt werden, in der beide Schritte in 2 räumlich getrennten Anlageteilen erfolgen.

### Beispiele 1a - c

In der beschriebenen Waschkolonne (50 x 1500 mm), die in einer Höhe von 1000 mm mit 10 mm Raschig-Ringen gefüllt war, wurden 1,5 l Dimethylformamid mit 2 l/min umgepumpt. Die Waschkolonne wurde stündlich mit 100 l Gas belastet. Das Gas hatte die in Tabelle 1 angegebene Zusammensetzung. Zur Hydrolyse des Vilsmeier-Salzes wurde stündlich die angegebene stöchiometrisch erforderliche Wassermenge gegeben, so daß die Beladung des Reaktionsträgers im wesentlichen konstant gehalten wurde. Die Innentemperatur der Kolonne wurde über einen außenliegenden Wärmetauscher konstant gehalten. Das den Kopf der Kolonne Verlassende Abgas enthielt nur noch Chlorwasserstoff, Kohlendioxid und Stickstoff.

**Tabelle 1**

| | Zusammensetzung (Vol-%) | | | | Wassermenge (g/h) | Innentemperatur °C |
|---|---|---|---|---|---|---|
| | HCl | CO₂ | COCl₂ | N₂ | | |
| Beispiel 1a | 47 | 19 | 7 | 27 | 5,4 | 60 |
| Beispiel 1b | 60 | - | 20 | 20 | 16,2 | 60 |
| Beispiel 1c | - | - | 40 | 60 | 32,0 | 80 |

### Beispiele 2 - 7

Es wurde wie in Beispiel 1 beschrieben gearbeitet, mit dem Unterschied, daß als Waschflüssigkeit anstelle von Dimethylformamid andere Waschflüssigkeiten eingesetzt wurden.

### Beispiel 2

Als Waschflüssigkeit wurde Diethylformamid unter den Bedingungen des Beispieles 1a eingesetzt.

### Beispiel 3

Als Waschflüssigkeit wurde Di-sec.-butylformamid unter den Bedingungen des Beispieles 1c eingesetzt.

### Beispiel 4

Als Waschflüssigkeit wurde Isobutyl-isopentylformamid unter Zusatz von 50 Gew.-% Dichlorbenzol unter den Bedingungen des Beispieles 1c eingesetzt.

### Beispiel 5

Als Waschflüssigkeit wurde Dicyclohexylformamid unter Zusatz von 50 Gew.-% Dichlorbenzol unter den Bedingungen des Bei Spieles 1a eingesetzt.

### Beispiel 6

Als Waschflüssigkeit wurde Diisopropylformamid unter Zusatz von 50 Gew.-% Dichlorethan unter den Bedingungen des Beispieles 1b eingesetzt.

### Beispiel 7

Als Waschflüssigkeit wurde N-Methylpyrrolidon unter Zusatz von 50 Gew.-% Dichlorethan unter den Bedingungen des Beispieles 1a eingesetzt.

Auch in den Beispielen 2 - 7 wurde jeweils ein phosgenfreies Abgas erhalten.

## Patentansprüche

1. Verfahren zur Entfernung von Phosgen aus Abgasen durch Auswaschen mit einer Flüssigkeit, dadurch gekennzeichnet, daß man das Abgas in einer Auswaschzone mit einer Flüssigkeit behandelt, die Verbindungen der allgemeinen Formel 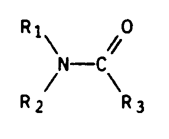 enthält oder aus diesen besteht, in der
R₁ und R₂ gleiche oder verschiedene Bedeutung haben und für aliphatische oder cycloaliphatische Alkylreste mit 1 bis 8 C-Atomen stehen,
oder R₁ und R₂ für die Gruppierung -(CH₂)ₙ- stehen, in der n 4 oder 5 ist,
R₃ für Wasserstoff oder eine aliphatische oder cycloaliphatische Alkylgruppe mit 1 bis 6 C-Atomen steht, oder
R₁ bzw. R₂ und R₃ für die Gruppierung -(CH₂)ₘ- stehen, in der m 3 oder 4 ist.

2. Verfahren nach Anspruch 1, dadurch gekennzeichnet, daß man die flüssige Phase aus der Auswaschzone abzieht und dieser Wasser zusetzt und die so behandelte flüssige Phase wieder in die Auswaschzone zurückführt.

3. Verfahren nach Ansprüchen 1 und 2, dadurch gekennzeichnet, daß die Flüssigkeit ein inertes aprotisches Lösungsmittel enthält.

## Claims

1. A process for removing phosgene from off-gases by washing with a liquid, which comprises treating the off-gas in a washing zone with a liquid which contains or is composed of compounds of the formula 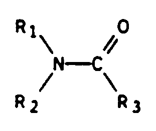 where R₁ and R₂ are identical or different and are each aliphatic or cycloaliphatic alkyl of 1 to 8 carbons,
or R₁ and R₂ are -(CH₂)ₙ- where n is 4 or 5,
R₃ is hydrogen or aliphatic or cycloaliphatic alkyl of 1 to 6 carbon atoms, or
R₁ or R₂ and R₃ are -(CH₂)ₘ- where m is 3 or 4.

2. A process as claimed in claim 1, wherein the liquid phase is extracted from the washing zone and water is added to the latter, and the liquid phase treated in this way is returned to the washing zone.

3. A process as claimed in claims 1 and 2, wherein the liquid contains an inert aprotic solvent.

## Revendications

1. Procédé d'élimination du phosgène de gaz résiduaires par lixiviation avec un liquide, caractérisé en ce que l'on traite le gaz résiduaire dans une zone de lixiviation par un liquide qui contient des composés de la formule générale : 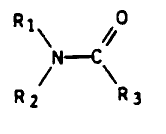 ou qui est constitué de tels composés, formule dans laquelle :
R₁ et R₂ possèdent des significations identiques ou différentes et représentent des radicaux alkyle aliphatiques ou cycloaliphatiques qui comportent de 1 à 8 atomes de carbone,
ou bien R₁ et R₂ représentent le groupement -(CH₂)ₙ-, où n est égal à 4 ou à 5,
R₃ représente un atome d'hydrogène ou un radical alkyle aliphatique ou cycloaliphatique qui comporte de 1 à 6 atomes de carbone, ou
R₁ ou R₂ et R₃ représentent le groupement -(CH₂)ₘ-, où m est égal à 3 ou à 4.

2. Procédé suivant la revendication 1, caractérisé en ce que l'on prélève la phase aqueuse de la zone de lixiviation et on lui ajoute de l'eau et on renvoie la phase liquide ainsi traitée dans la zone de lixiviation.

3. Procédé suivant les revendications 1 et 2, caractérisé en ce que le liquide contient un solvant aprotique et inerte.
